# FASCICULE DE BREVET EUROPEEN

(11) **EP 1 866 565 B1**
(45) Date de publication et mention de la délivrance du brevet: **21.11.2012**
(21) Numéro de dépôt: 06707368.4
(22) Date de dépôt: 02.03.2006
(51) Int. Cl.: F16L 37/14, F16L 37/088

(54) **DISPOSITIF DE RACCORDEMENT DE DEUX ELEMENTS**
VORRICHTUNG ZUR VERBINDUNG ZWEIER ELEMENTE
DEVICE FOR CONNECTING TWO ELEMENTS

(30) Priorité: 25.03.2005 FR 0502969
(43) Date de publication de la demande: 19.12.2007
(73) Titulaire: A. RAYMOND ET CIE, 38000 Grenoble (FR)
(72) Inventeur: CHAUPIN, Jérôme, F-38830 Saint-Pierre d'Allevard (FR)
(74) Mandataire: Rüttgers, Joachim
(86) Numéro de dépôt international: PCT/EP2006/001892
(87) Numéro de publication internationale: WO 2006/099933

(56) Documents cités:
- DE-A1- 10 055 348
- FR-A- 2 855 590
- US-A1- 2004 178 629

## Description

### Domaine technique de l'invention

L'invention concerne un dispositif de raccordement de deux éléments comprenant :
- un embout femelle, reliée au premier élément à raccorder,
- un embout mâle, relié au second élément à raccorder et destiné à s'insérer dans l'embout femelle,
- un organe de verrouillage, conformé en cavalier ayant une tête et deux branches latérales et destiné à maintenir l'embout mâle dans l'embout femelle après raccordement.

L'invention s'applique notamment à des éléments du type conduits de transport de fluide.

### État de la technique

Il existe deux principaux types connus de dispositifs de raccordement pour fixer un embout mâle d'un premier élément, par exemple un tuyau, à un embout femelle d'un second élément, par exemple un autre tuyau de diamètre supérieur.

Un premier exemple de dispositif de raccordement utilise un élément de verrouillage, de forme filaire. Le document US 5000614 décrit notamment un organe de verrouillage en forme d'épingle, avec une tête prolongée par deux branches. L'embout mâle est introduit dans l'embout femelle et les branches de l'épingle viennent bloquer l'embout mâle à l'intérieur de l'embout femelle, à travers des évidements réalisés dans les parois de l'embout femelle.

Cependant, une telle épingle est difficilement manipulable et peut se perdre lors du montage des deux embouts. La tenue mécanique du dispositif de raccordement est faible, car les branches de l'épingle se déforment facilement. Par ailleurs, la tête de l'épingle fait saillie du dispositif de raccordement, après assemblage de l'embout mâle dans l'embout femelle, ce qui engendre quelques encombrements.

Un autre exemple de dispositif de raccordement connu utilise un organe de verrouillage sous forme de cavalier. Le document FR-A-2795156 décrit notamment un cavalier comportant une tête, entourant un premier élément femelle, et deux branches flexibles, destinées à maintenir un élément mâle introduit dans l'élément femelle. Pour introduire l'élément mâle, il faut appuyer sur la tête du cavalier, pour provoquer l'écartement des branches et autoriser le passage de l'élément mâle. En relâchant la tête du cavalier, les branches se resserrent sur l'élément mâle et le maintiennent dans l'élément femelle.

Cependant, ce type de cavalier nécessite une intervention manuelle pour effectuer le raccordement. Le cavalier s'avère trop facilement démontable et peut se perdre facilement lors du montage ou du démontage de l'élément mâle dans l'élément femelle. Par ailleurs, la tenue mécanique du dispositif de raccordement est faible, car le cavalier s'avère trop flexible.

Un autre exemple, décrit dans le document FR 2,855,590, utilise un organe de verrouillage sous forme d'une agrafe.

### Objet de l'invention

L'invention a pour but de remédier aux inconvénients précités et a pour objet la réalisation d'un dispositif de raccordement de tenue mécanique élevée, permettant un assemblage rapide et facile d'un embout mâle dans un embout femelle, tout en assurant un verrouillage optimal de l'embout mâle dans l'embout femelle, après raccordement.

L'objet de l'invention est caractérisé en ce que le dispositif de raccordement comporte :
- des moyens d'actionnement de l'organe de verrouillage, associés à l'embout mâle et destinés à coopérer avec l'organe de verrouillage, de sorte que l'insertion de l'embout mâle dans l'embout femelle provoque le positionnement de l'embout mâle entre les branches de l'organe de verrouillage,
- des moyens de rappel élastique, associés à l'organe de verrouillage pour coopérer avec l'embout femelle, tel que l'organe de verrouillage bloque automatiquement le positionnement de l'embout mâle dans l'embout femelle, en fin de course d'insertion de l'embout mâle.

Selon un développement de l'invention, lesdits moyens d'actionnement comportent un cône d'actionnement, solidaire de l'embout mâle et destiné à venir en contact avec un rebord inférieur de la tête de l'organe de verrouillage, pour provoquer le soulèvement de l'organe de verrouillage pendant l'insertion de l'embout mâle.

Selon un autre développement de l'invention, lesdits moyens de rappel élastique comportent au moins une languette déformable, solidaire d'une branche correspondante de l'organe de verrouillage et destinée à se déplacer le long d'une surface de glissement correspondante, pendant l'insertion de l'embout mâle dans l'embout femelle.

Un tel dispositif de raccordement, avec des moyens d'actionnement de l'organe de verrouillage et des moyens de rappel élastique permettant un verrouillage automatique de l'embout mâle dans l'embout femelle, permet donc de raccorder et de verrouiller simultanément les deux embouts, par une simple insertion axiale de l'embout mâle dans l'embout femelle.

Selon un mode de réalisation préférentiel, chaque languette déformable comprend une extrémité fixe solidaire de la branche correspondante de l'organe de verrouillage et une extrémité libre bombée coulissant sur la surface de glissement correspondante. L'embout femelle comporte au moins un cran de blocage, associé à chaque surface de glissement et destiné à maintenir la languette déformable correspondante de l'organe de verrouillage dans une position de déblocage autorisant le désassemblage de l'embout mâle de l'embout femelle.

Un tel système de blocage de l'organe de verrouillage permet de désassembler facilement l'embout mâle de l'embout femelle, par une simple translation axiale, de sens opposé au sens d'introduction de l'embout mâle.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente un premier mode particulier de réalisation d'un dispositif de raccordement selon l'invention, avec l'embout mâle en attente d'insertion dans l'embout femelle.
La figure 2 représente une vue éclatée des différents éléments constituant l'embout femelle du dispositif de raccordement selon la figure 1.
La figure 3 représente l'embout femelle selon les figures 1 et 2, en attente du raccordement avec l'embout mâle.
La figure 4 est une vue partielle agrandie d'une partie de l'embout femelle selon

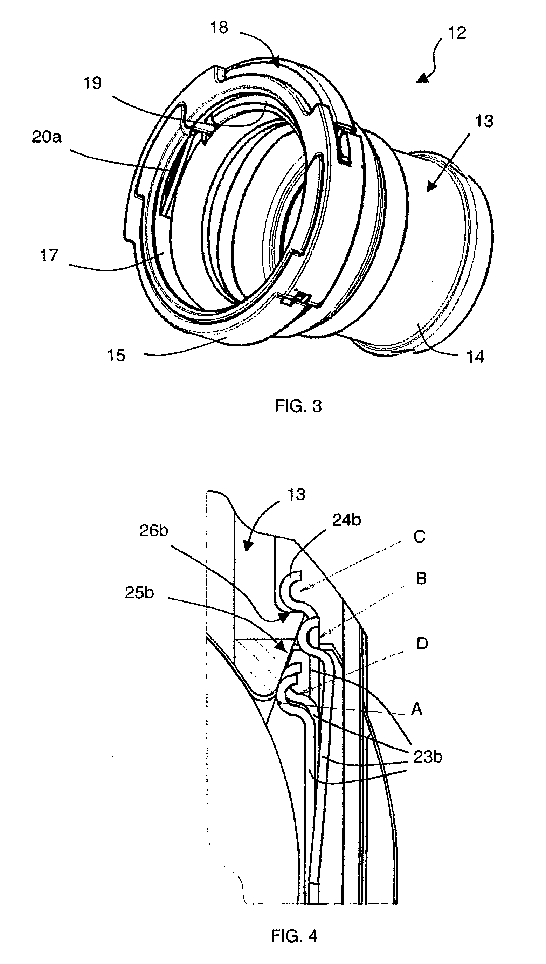

la figure 3, illustrant différentes positions possibles de l'organe de verrouillage à l'intérieur de l'embout femelle.

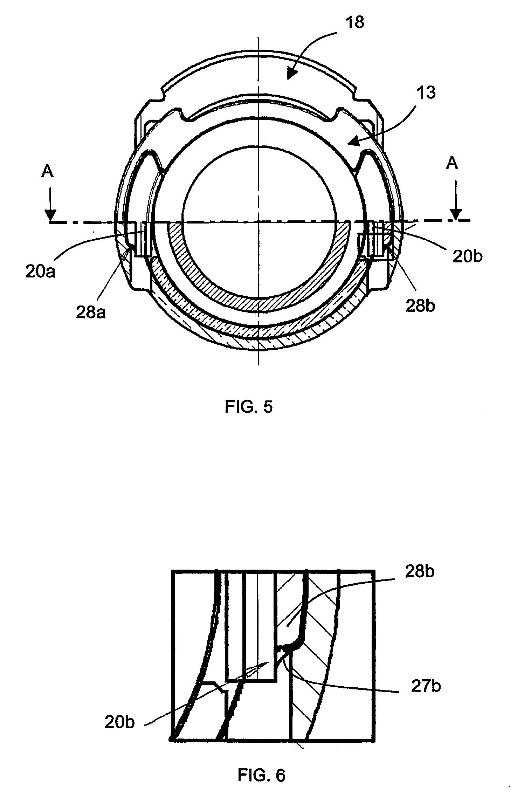

La figure 5 est une vue en coupe partielle selon l'axe A-A de l'embout femelle selon la figure 3.
La figure 6 représente une vue partielle agrandie d'une partie de l'embout femelle selon la figure 5, illustrant le blocage de l'organe de verrouillage dans l'embout femelle.

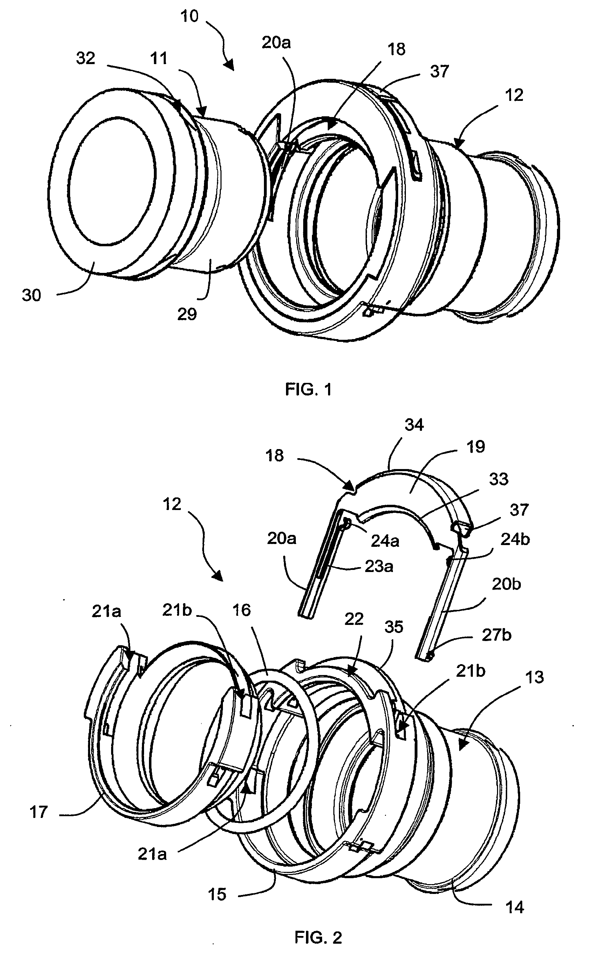

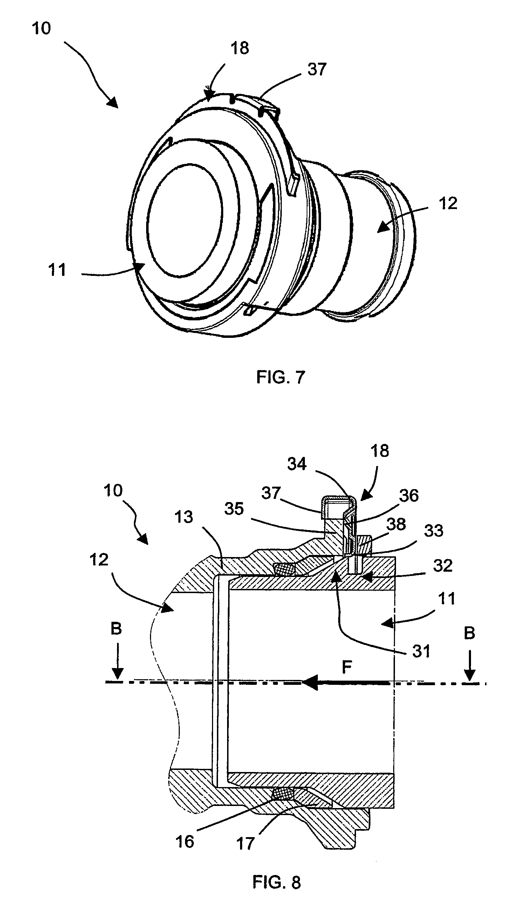

Les figures 7 et 8 représentent, respectivement, une vue en perspective et une vue partielle, en coupe selon l'axe B-B, du dispositif de raccordement selon la figure 1, avec l'embout mâle en cours d'insertion dans l'embout femelle, avant verrouillage.

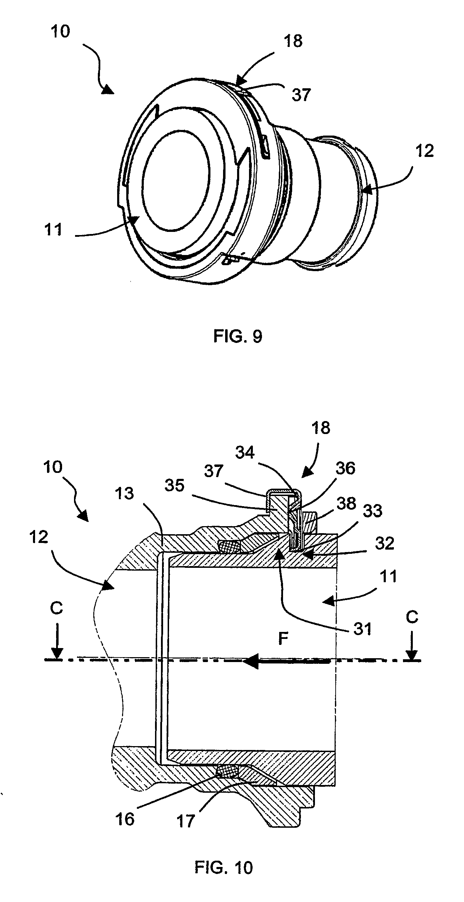

Les figures 9 et 10 représentent, respectivement, une vue en perspective et une vue partielle, en coupe selon l'axe C-C, du dispositif de raccordement selon les figures 1, 7 et 8, avec l'embout mâle verrouillé dans l'embout femelle.

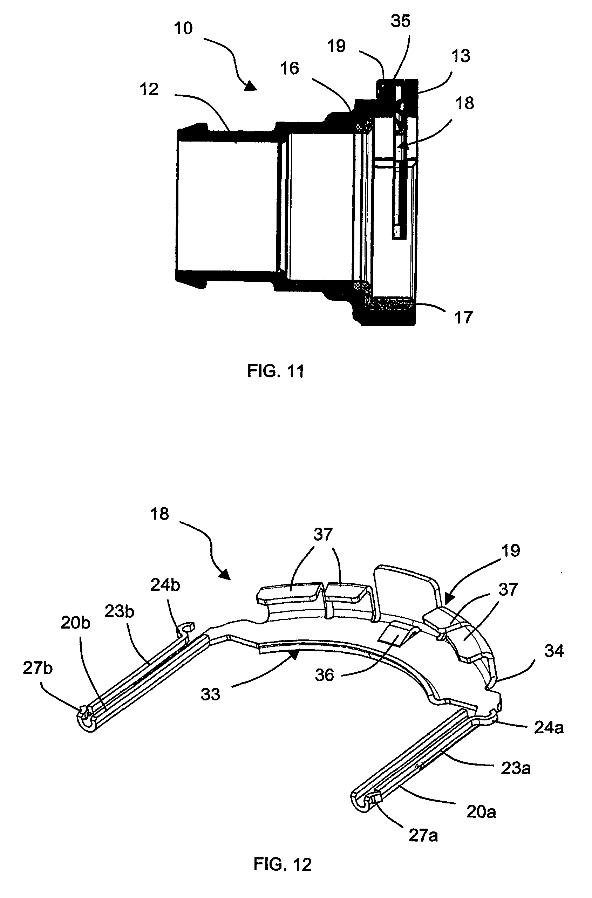

La figure 11 est une vue en coupe partielle d'une variante de réalisation d'un dispositif de raccordement selon l'invention.
La figure 12 est une variante de réalisation de l'organe de verrouillage d'un autre mode particulier de réalisation d'un dispositif de raccordement selon l'invention.

### Description de modes particuliers de réalisation

En référence aux figures, le dispositif de raccordement 10 comporte un embout mâle 11, relié un à premier élément (non représenté), par exemple un tuyau de transport de fluide, et destiné à s'encliqueter dans un embout femelle 12, relié à un second élément (non représenté), par exemple un autre tuyau de transport de fluide.

Sur la figure 1, l'embout mâle 11 et l'embout femelle 12 sont, de préférence, de forme générale sensiblement tubulaire et sont destinés à s'assembler par insertion coaxiale de l'embout mâle 11 dans l'embout femelle 12. L'embout mâle 11 et l'embout femelle 12 peuvent être en matériau métallique ou en matières plastiques.

Sur les figures 2 et 3, l'embout femelle 12 comprend un corps principal 13, présentant une première extrémité 14, solidaire de l'élément à raccorder, et une extrémité de raccordement 15, coopérant avec l'embout mâle 11 et présentant une section supérieure à la section de la première extrémité 14.

L'embout femelle 12 comprend au moins un joint d'étanchéité 16 (figure 2), disposé à l'intérieur d'une gorge, réalisée dans l'extrémité de raccordement 15 du corps 13. Le joint 16 permet notamment d'assurer l'étanchéité du dispositif de raccordement 10, dans le cas d'une connexion entre deux conduits de transport de fluide.

L'embout femelle 12 comprend, de préférence, une bague de guidage 17, destinée à la fois à maintenir le joint d'étanchéité 16 à l'intérieur du corps 13 et à servir de guidage pour l'embout mâle 11 lors de son insertion dans l'embout femelle 12. Dans le mode particulier de réalisation du dispositif de raccordement 10, représenté sur les figures 1 à 3, l'extrémité de raccordement 15 du corps 13 et la bague de guidage 17 présentent des formes complémentaires, afin de s'emboîter parfaitement et former une collerette uniforme, apte à recevoir l'embout mâle 11 (figure 3).

L'embout femelle 12 comporte également un organe de verrouillage 18, disposé dans l'extrémité de raccordement 15 du corps 13 de l'embout femelle 12 (figure 3). L'organe de verrouillage 18 est destiné à la fois à permettre l'assemblage rapide de l'embout mâle 11 dans l'embout femelle 12 et à verrouiller l'embout mâle 11 dans l'embout femelle 12, en fin de course d'insertion de l'embout mâle 11 dans l'embout femelle 12.

À titre d'exemple, l'organe de verrouillage 18 est obtenu par découpage et pliage d'un feuillard ou d'une tôle métallique d'épaisseur prédéterminée, pour former une pièce monobloc sensiblement en forme de cavalier, comme représenté sur la figure 2.

L'organe de verrouillage 18 comprend une tête 19, de forme sensiblement circulaire, épousant sensiblement la forme de l'extrémité de raccordement 15 du corps 13 (figures 1 et 3), et deux branches latérales 20a, 20b, parallèles. La tête 19 et les branches 20a, 20b sont destinées à coopérer avec l'embout mâle 11 lors de son insertion dans l'embout femelle 12 (figure 1).

Le corps 13 de l'embout femelle 12 comporte des logements latéraux 21 a, 21 b, respectivement pour les branches 20a, 20b de l'organe de verrouillage 18, et un évidement 22 (figure 2), pour la tête 19 de l'organe de verrouillage 18. Dans le cas d'un embout femelle 12 comprenant une bague de guidage 17, celle-ci comporte également des logements 21a, 21b pour recevoir les branches 20a, 20b de l'organe de verrouillage 18 (figure 2). Les logements 21 a, 21 b jouent le rôle de rails de guidage et de coulissement pour les branches 20a, 20b de l'organe de verrouillage 18, lors du soulèvement de l'organe de verrouillage 18, provoqué par l'insertion de l'embout mâle 11, comme représenté sur les figures 8 et 10.

Sur la figure 3, l'organe de verrouillage 18 est dans sa position de repos, en attente de l'introduction de la partie mâle 11. La tête 19 de l'organe de verrouillage 18 dépasse à l'intérieur de l'orifice formé par l'extrémité de raccordement 15.

Sur les figures 2 et 4, chaque branche latérale 20a, 20b comporte, de préférence, une languette déformable 23a, 23b, prédécoupée dans la branche latérale 20a, 20b correspondante. Chaque languette déformable 23a, 23b présente une extrémité inférieure fixe, solidaire de la branche latérale 20a, 20b correspondante, et une extrémité supérieure libre, munie d'une partie bombée 24a, 24b, de préférence, en forme de crochet. Dans le mode particulier de réalisation de l'organe de verrouillage 18, représenté sur les figures 2 et 4, les parties bombées 24a, 24b des crochets se font face en direction de l'espace délimité par les deux branches latérales 20a, 20b de l'organe de verrouillage 18.

Sur la figure 4, où uniquement les références relatives à la languette déformable 23b sont représentées, la partie bombée 24a, 24b de chaque crochet coulisse le long d'une surface de glissement 25a, 25b, solidaire du corps 13 de l'embout femelle 12, pendant l'insertion de l'embout mâle 11. Les surfaces de glissement 25a, 25b sont situées dans l'extrémité de raccordement 15 du corps 13 de l'embout femelle 12 (figure 2).

L'inclinaison de la pente des surfaces de glissement 25a, 25b est calculée au préalable, de sorte que les languettes déformables 23a, 23b passent d'une première position A (figure 4), à l'extrémité inférieure des surfaces de glissement 25a, 25b, à une seconde position B (figure 4), à l'extrémité supérieure des surfaces de glissement 25a, 25b. La position A correspond à la position de repos de l'organe de verrouillage 18, avant insertion de l'embout mâle 11 (figures 1 et 3), dans laquelle les languettes déformables 23a, 23b sont non contraintes et parallèles aux branches latérales 20a, 20b de l'organe de verrouillage 18. La position B correspond à la position d'insertion de l'embout mâle 11, avant son verrouillage dans l'embout femelle 12 (figure 8). Cette position B correspond à la position de déformation maximale des languettes déformables 23a, 23b.

Après la position B, les languettes déformables 23a, 23b passent dans une position D, entre les positions A et B, correspondant à la position de fin de course d'insertion de l'embout mâle 11, à savoir la position de verrouillage de l'embout mâle 11 dans l'embout femelle 12. La position D correspond à la position finale de l'organe de verrouillage 18, dans laquelle l'organe de verrouillage 18 chevauche l'embout mâle 11. La position de verrouillage D est distincte de la position de repos A et les languettes déformables 23a, 23b restent légèrement contraintes dans la position de verrouillage de l'embout mâle 11 (figure 4), car l'embout mâle 11 empêche le retour de l'organe de verrouillage 18 dans sa position initiale de repos A.

Les surfaces de glissement 25a, 25b sont prolongées, respectivement, par des crans de blocage 26a, 26b, destinés à maintenir l'organe de verrouillage 18, dans une position de blocage C (figure 4). Les crans de blocage 26a, 26b constituent des points de stabilisation de l'organe de verrouillage 18, permettant le libre désengagement de l'embout mâle, par une simple translation axiale, de sens opposé au sens d'insertion de l'embout mâle 11. Dans cette position C, l'organe de verrouillage 18 ne maintient plus l'embout mâle 11, qui peut alors se désassembler librement de l'embout femelle 12.

Sur les figures 2, 5 et 6, l'organe de verrouillage 18 comporte des ergots de blocage 27a, 27b, réalisés, de préférence, sur chaque branche latérale 20a, 20b (figure 2). Les ergots de blocage 27a, 27b sont orientés, par exemple, en opposition par rapport aux parties bombées 24a, 24b des crochets, à l'extérieur des branches latérales 20a, 20b. Ils coopèrent avec des butées latérales 28a, 28b respectivement solidaires du corps 13 de l'embout femelle 12 (figures 5 et 6).

Sur la figure 5, l'organe de verrouillage 18 est dans une position limite de soulèvement, dans laquelle les ergots 27a, 27b viennent en appui contre les butées 28a, 28b et empêchent tout démontage de l'organe de verrouillage 18 en dehors de l'embout femelle 12 (figure 6). L'organe de verrouillage 18 est donc pré-assemblé de façon indémontable dans l'embout femelle 12, avant insertion de l'embout mâle 11, ce qui évite tout risque de perte de l'organe de verrouillage 18.

Sur les figures 1, 8 et 10, l'embout mâle 11 comporte une première extrémité de raccordement 29, destinée à s'insérer dans l'extrémité de raccordement 15 de l'embout femelle 12, et une seconde extrémité libre 30, reliée à l'élément à raccorder et de section supérieure à la section de l'extrémité de raccordement 29.

L'embout mâle 11 comporte un cône d'actionnement 31, solidaire de l'extrémité de raccordement 29 (figures 8 et 10) et destiné à actionner l'organe de verrouillage 18, afin de provoquer son coulissement dans les logements 21 a, 21 b.

L'embout mâle 11 comporte au moins une rainure de retenue 32, disposée au niveau de l'extrémité libre 30 de l'embout mâle 11 et destinée à recevoir la tête 19 de l'organe de verrouillage 18 en position de verrouillage (figure 10). Comme représenté sur les figures 8 et 10, la rainure 32 est adjacente au cône d'actionnement 31, afin que l'organe de verrouillage 18 passe automatiquement dans sa position de verrouillage, en fin de course d'insertion de l'embout mâle 11, juste après le passage par le sommet du cône d'actionnement 31.

La tête 19 de l'organe de verrouillage 18 comporte un rebord inférieur 33, sur lequel s'appui le cône d'actionnement 31 (figure 8), lors de l'insertion de l'embout mâle 11. Le rebord inférieur 33 est, de préférence, arrondi, pour ne pas détériorer l'embout mâle 11, notamment dans le cas où l'embout mâle 11 est en matières plastiques. Le rebord inférieur 33 présente une forme sensiblement circulaire, épousant la forme du diamètre extérieur de l'embout mâle 11, afin d'optimiser l'insertion de l'embout mâle 11 et le coulissement de l'organe de verrouillage 18.

La tête 19 de l'organe de verrouillage 18 comporte également un rebord supérieur 34, comportant au moins une lamelle recourbée 37, afin de coopérer avec un épaulement de maintien 35, faisant saillie de l'extrémité de raccordement 15 du corps 13 de l'embout femelle 12. Le rebord supérieur 34, recourbé autour de l'épaulement 35, permet d'assurer une tenue à l'arrachement optimale pour l'organe de verrouillage 18, dans le cas de sollicitations intempestives de démontage de l'embout mâle 11.

La lamelle recourbée 37 peut s'étendre sur toute la longueur du rebord supérieur 34, comme représenté sur la figure 2, ou sur uniquement une portion du rebord supérieur 34, comme représenté sur les figures 1, 7 et 9. À titre d'exemple, la lamelle recourbée 37 s'étend sensiblement sur un huitième de la longueur du rebord supérieur 34.

L'assemblage de l'embout mâle 11 dans l'embout femelle 12, avec verrouillage de l'embout mâle 11, en fin de course d'insertion, va être décrit plus en détail au regard des figures 1 et 7 à 10. Sur la figure 1, l'organe de verrouillage 18 est en position de repos dans l'embout femelle 12 et les languettes déformables 23a, 23b sont dans leur position de repos, parallèles aux branches latérales 20a, 20b (figure 2), dans la position A de la figure 4.

Sur les figures 7 et 8, l'embout mâle 11 s'insère, selon la flèche F, dans l'embout femelle 12 et le cône d'actionnement 31 provoque le soulèvement de l'organe de verrouillage 18, par contact sur le rebord inférieur 33 de la tête 19 (figure 8). Les branches 20a, 20b de l'organe de verrouillage 18 coulissent dans les logements 21 a, 21 b de l'embout femelle 12 et les languettes déformables 23a, 23b glissent le long des surfaces de glissement 25a, 25b de l'embout femelle 12, pour atteindre la position d'insertion B de la figure 4. L'embout mâle 11 se positionne entre les branches latérales 20a, 20b, qui restent parallèles entre elles pendant le soulèvement de l'organe de verrouillage 18. Les languettes déformables 23a, 23b sont contraintes au maximum (figure 4).

Sur les figures 9 et 10, l'embout mâle 11 est positionné en fin de course d'insertion dans l'embout femelle 12. Le rebord inférieur 33 de la tête 19 a dépassé le sommet du cône d'actionnement 31 et se loge dans la rainure de retenue 32 de l'embout mâle 11. L'organe de verrouillage 18 est dans sa position finale de verrouillage, position D de la figure 4, grâce à l'élasticité des languettes déformables 23a, 23b, qui ont glissé en sens inverse le long des surfaces de glissement 25a, 25b (figure 10).

L'organe de verrouillage 18 chevauche maintenant l'embout mâle 11 et le rebord supérieur 34 recouvre l'épaulement 35 du corps 13, pour éviter tout arrachement intempestif de l'embout mâle 11. Le rebord inférieur 33 de la tête 19 de l'organe de verrouillage 18 est en contact avec le fond de la rainure 32 de l'embout mâle 11, pour assurer une accroche optimale de l'organe de verrouillage 18 dans l'embout mâle 11. Le rebord supérieur 34 recouvre l'épaulement 35 en laissant un faible jeu résiduel, assurant une tenue à l'arrachement optimale.

Dans cette position de verrouillage (figure 10), l'embout mâle 11 n'est pas en contact avec le fond de l'embout femelle 12. La position de fin de course d'insertion de l'embout mâle 11 correspond à son verrouillage par l'organe de verrouillage 18 et non à sa butée avec le fond de l'embout femelle 12. Ainsi, l'espace résiduel entre les deux embouts 11, 12 est un moyen de sécurité permettant de contrôler si l'embout mâle 11 est bien verrouillé ou juste inséré en butée dans l'embout femelle 12.

L'assemblage de l'embout mâle 11 dans l'embout femelle 12 se fait donc par une simple translation axiale et le verrouillage de l'embout mâle 11 à l'intérieur de l'embout femelle 12 est réalisé automatiquement par l'organe de verrouillage 18.

Dans la variante de réalisation du dispositif de raccordement 10, représentée sur la figure 11, ainsi que sur les figures 1 à 3, 7 et 9, le corps 13 de l'embout femelle 12 englobe complètement l'organe de verrouillage 18 en position de repos et/ou en position de fin de course d'insertion de l'embout mâle 11. La compacité du dispositif de raccordement 10 et la tenue à l'arrachement de l'organe de verrouillage 18 sont alors optimisées.

Un tel dispositif 10 de raccordement permet donc simultanément d'assembler et de verrouiller automatiquement l'embout mâle 11 dans l'embout femelle 12 par une simple translation axiale. Le désassemblage de l'embout mâle 11 se fait également facilement grâce aux crans de blocage 26a, 26b de l'embout femelle 12, qui permettent de libérer le verrouillage de l'embout mâle 11.

Le dispositif de raccordement 10 présente une bonne tenue mécanique, notamment grâce à l'organe de verrouillage 18 métallique indémontable, dont uniquement les languettes déformables 23a, 23b se déforment. Par ailleurs, la tenue en température de l'organe de verrouillage 18 est bonne et la tenue à l'arrachement du dispositif de raccordement 10 est assurée, entre autres, par le rebord supérieur 34 de la tête 19 de l'organe de verrouillage 18, chevauchant l'épaulement 35 de l'embout femelle 12. Comme représenté sur les figures 8 et 10, le corps 13 de l'embout femelle 12 peut éventuellement comporter une collerette circulaire 38 formant butée, destinée à bloquer l'organe de verrouillage 18 et assurer une tenue à l'arrachement optimale.

L'invention n'est pas limitée aux différents modes de réalisation décrits ci-dessus. La forme de l'organe de verrouillage 18, de l'embout femelle 12 et de l'embout mâle 11 peuvent être différentes, tant que l'organe de verrouillage 18 est actionné par l'embout mâle 11 pendant son insertion et verrouille automatiquement l'embout mâle 11 dans l'embout femelle 12, en fin de course d'insertion.

L'embout femelle 12 peut comporter plusieurs joints d'étanchéité 16, l'organe de verrouillage 18 peut être obtenu par un procédé d'emboutissage. L'embout mâle 11 peut comporter deux rainures de retenue 32, symétriques par rapport à l'axe C-C (figure 10).

Dans la variante de réalisation de l'organe de verrouillage 18, représenté sur la figure 12, les languettes déformables 23a, 23b peuvent notamment être orientées dans l'autre sens, vers l'extérieur de l'espace délimité par les branches latérales 20a, 20b. Les surfaces de glissement 25a, 25b associées de l'embout femelle 12 (non représentées sur la figure 12) sont alors orientées de façon complémentaire et les ergots de blocage 27a, 27b sont orientés dans le même sens que les parties bombées 24a, 24b des languettes déformables 23a, 23b. Le retour élastique de l'organe de verrouillage 18 est sollicité de la même façon par déformation des languettes déformables 23a, 23b et coulissement le long des surfaces de glissement 25a, 25b.

Par ailleurs, le rebord supérieur 34 de la tête 19 peut comporter plusieurs lamelles recourbées 37, disposées côte à côte et coopérant avec l'épaulement de maintien 35 de l'embout femelle 12, pour optimiser la tenue à l'arrachement. La tête 19 peut comporter également un bossage 36 (figures 8, 10 et 12), permettant d'optimiser la tenue à l'arrachement en cas de déformation de l'organe de verrouillage 18.

Un tel dispositif de raccordement 10, avec verrouillage automatique de l'embout mâle 11 dans l'embout femelle 12, peut s'utiliser notamment dans tous les domaines nécessitant la connexion de tuyaux de transport de fluide, principalement pour l'industrie automobile.

## Revendications

1. Dispositif de raccordement (10) de deux éléments comprenant :
- un embout femelle (12), reliée au premier élément à raccorder,
- un embout mâle (11), relié au second élément à raccorder et destiné à s'insérer dans l'embout femelle (12),
- un organe de verrouillage (18), conformé en cavalier ayant une tête (19) et deux branches latérales (20a, 20b) et destiné à maintenir l'embout mâle (11) dans l'embout femelle (12) après raccordement,
dispositif de raccordement **caractérisé en ce qu'**il comporte :
- des moyens d'actionnement (31, 33) de l'organe de verrouillage (18), associés à l'embout mâle (11) et destinés à coopérer avec l'organe de verrouillage (18), de sorte que l'insertion de l'embout mâle (11) dans l'embout femelle (12) provoque le positionnement de l'embout mâle (11) entre les branches (20a, 20b) de l'organe de verrouillage (18),
- des moyens de rappel élastique (23a, 23b ; 25a 25b), associés à l'organe de verrouillage (18) pour coopérer avec l'embout femelle (12), tel que l'organe de verrouillage (18) bloque automatiquement le positionnement de l'embout mâle (11) dans l'embout femelle (12), en fin de course d'insertion de l'embout mâle (11).

2. Dispositif de raccordement selon la revendication 1, **caractérisé en ce que** lesdits moyens d'actionnement comportent un cône d'actionnement (31), solidaire de l'embout mâle (11) et destiné à venir en contact avec un rebord inférieur (33) de la tête (19) de l'organe de verrouillage (18), pour provoquer le soulèvement de l'organe de verrouillage (18) pendant l'insertion de l'embout mâle (11).

3. Dispositif de raccordement selon la revendication 2, **caractérisé en ce que** le rebord inférieur (33) de la tête (19) de l'organe de verrouillage (18) est arrondi.

4. Dispositif de raccordement selon l'une des revendications 2 et 3, **caractérisé en ce que** l'embout femelle (12) comporte des rainures de logement (21 a, 21 b) destinées à recevoir les branches (20a, 20b) de l'organe de verrouillage (18), lesdites rainures (21 a, 21 b) jouant le rôle de rails de coulissement lors de l'actionnement de l'organe de verrouillage (18).

5. Dispositif de raccordement selon l'une quelconque des revendications 1 à 4, **caractérisé en ce que** lesdits moyens de rappel élastique comportent au moins une languette déformable (23a, 23b), solidaire d'une branche (20a, 20b) correspondante de l'organe de verrouillage (18) et destinée à se déplacer le long d'une surface de glissement (25a, 25b) correspondante, pendant l'insertion de l'embout mâle (11) dans l'embout femelle (12).

6. Dispositif de raccordement selon la revendication 5, **caractérisé en ce que** chaque languette déformable (23a, 23b) comprend une extrémité fixe solidaire de la branche (20a, 20b) correspondante de l'organe de verrouillage (18) et une extrémité libre bombée (24a, 24b) coulissant sur la surface de glissement (25a, 25b) correspondante.

7. Dispositif de raccordement selon l'une des revendications 5 et 6, **caractérisé en ce que** chaque surface de glissement (25a, 25b) est solidaire de l'embout femelle (12) et présente une pente d'inclinaison prédéterminée, pour assurer le retour élastique de la languette déformable (23a, 23b) correspondante, en position de fin de course d'insertion de l'embout mâle (11).

8. Dispositif de raccordement selon l'une quelconque des revendications 5 à 7, **caractérisé en ce que** l'embout femelle (12) comporte au moins un cran de blocage (26a, 26b), associé à chaque surface de glissement (25a, 25b) et destiné à maintenir la languette déformable (23a, 23b) correspondante de l'organe de verrouillage (18) dans une position de déblocage (C) autorisant le désassemblage de l'embout mâle (11) de l'embout femelle (12).

9. Dispositif de raccordement selon l'une quelconque des revendications 1 à 8, **caractérisé en ce que** l'embout mâle (11) comporte au moins une rainure de retenue (32), dans laquelle se positionne automatiquement la tête (19) de l'organe de verrouillage (18), en position de fin de course d'insertion de l'embout mâle (11).

10. Dispositif de raccordement selon l'une quelconque des revendications 1 à 9, **caractérisé en ce que** la tête (19) de l'organe de verrouillage (18) comporte un rebord supérieur (34) présentant au moins une lamelle recourbée (37), destinée à coopérer avec un épaulement de maintien (35) faisant saillie de l'embout femelle (12).

11. Dispositif de raccordement selon l'une quelconque des revendications 1 à 10, **caractérisé en ce que** l'embout femelle (12) comporte des butées latérales (28a, 28b) coopérant avec des ergots de blocage (27a, 27b) solidaires des extrémités libres des branches latérales (20a, 20b) de l'organe de verrouillage (18).

12. Dispositif de raccordement selon l'une quelconque des revendications 1 à 11, **caractérisé en ce que** l'organe de verrouillage (18) est obtenu par découpage et pliage d'une tôle ou d'un feuillard métallique d'épaisseur prédéterminée.

## Claims

1. Device (10) for coupling two elements comprising:
- a female coupling (12) connected to the first element to be connected,
- a male coupling (11) connected to the second element to be connected and designed to be inserted into the female coupling (12),
- a locking member (18) conformed as a staple having a head (19) and two lateral branches (20a, 20b) and designed to hold the male coupling (11) inside the female coupling (12) after connection,
which Coupling device is **characterized in that** it includes:
- means (31, 33) for actuating the locking member (18) associated with the male coupling (11) and designed to cooperate with the locking member (18) so that the insertion of the male coupling (11) into the female coupling (12) causes positioning of the male coupling (11) between the branches (20a, 20b) of the locking member (18),
- spring-loading means (23a, 23b; 25a, 25b) associated with the locking member (18) for cooperating with the female coupling (12) so that the locking member (18) automatically locks the position of the male coupling (11) inside the female coupling (12) at the end of the insertion stroke of the male coupling (11).

2. Coupling device according to claim 1, **characterized in that** said actuating means include an actuating cone (31) fastened to the male coupling (11) and designed to come into contact with a lower rim (33) of the head (19) of the locking member (18) to cause raising of the locking member (18) during insertion of the male coupling (11).

3. Coupling device according to claim 2, **characterized in that** the lower rim (33) of the head (19) of the locking member (18) is rounded.

4. Coupling device according to either one of claims 2 and 3, **characterized in that** the female coupling (12) includes housing grooves (21a, 21b) designed to receive the branches (20a, 20b) of the locking member (18), said grooves (21a, 21b) serving as sliding rails on actuation of the locking member (18).

5. Coupling device according to any one of claims 1 to 4, **characterized in that** said spring-loading means include at least one deformable tongue (23a, 23b) fastened to a corresponding branch (20a, 20b) of the locking member (18) and designed to move along a corresponding sliding surface (25a, 25b) during insertion of the male coupling (11) in the female coupling (12).

6. Coupling device according to claim 5, **characterized in that** each deformable tongue (23a, 23b) has a fixed end fastened to the corresponding branch (20a, 20b) of the locking member (18) and a curved free end (24a, 24b) sliding on the corresponding sliding surface (25a, 25b).

7. Coupling device according to either one of claims 5 and 6, **characterized in that** each sliding surface (25a, 25b) is fastened to the female coupling (12) and has a slope of predetermined inclination to spring-load the corresponding deformable tongue (23a, 23b) in the end of insertion stroke position of the male coupling (11).

8. Coupling device according to any one of claims 5 to 7, **characterized in that** the female coupling (12) includes at least one locking notch (26a, 26b) associated with each sliding surface (25a, 25b) and designed to hold the corresponding deformable tongue (23a, 23b) of the locking member (18) in a locking position (C) allowing disassembly of the male coupling (11) from the female coupling (12).

9. Coupling device according to any one of claims 1 to 8, **characterized in that** the male coupling (11) includes at least one retaining groove (32) in which the head (19) of the locking member (18) is automatically positioned in the end of insertion stroke position of the male coupling (11).

10. Coupling device according to any one of claims 1 to 9, **characterized in that** the head (19) of the locking member (18) includes an upper rim (34) having at least one curved blade (37) designed to cooperate with a retaining shoulder (35) projecting from the female coupling (12).

11. Coupling device according to any one of claims 1 to 10, **characterized in that** the female coupling (12) includes lateral abutments (28a, 28b) cooperating with locking lugs (27a, 27b) fastened to the free ends of the lateral branches (20a, 20b) of the locking member (18).

12. Coupling device according to any one of claims 1 to 11, **characterized in that** the locking member (18) is produced by cutting and bending a metal plate or strip of predetermined thickness.

## Patentansprüche

1. Verbindungsvorrichtung (10) für zwei Elemente, die
- ein Aufnahmeteil (12), das mit dem ersten zu verbindenden Element verbunden ist,
- ein Einsteckteil (11), das mit dem zweiten zu verbindenden Element verbunden und dazu eingerichtet ist, sich in das Aufnahmeteil (12) einzufügen, und
- ein Verriegelungsorgan (18) aufweist, das als Klemmteil mit einem Kopf (19) sowie mit zwei Seitenarmen (20a, 20b) ausgebildet und dazu eingerichtet ist, das Einsteckteil (11) nach dem Verbinden in dem Aufnahmeteil (12) zu halten,
wobei die Verbindungsvorrichtung **dadurch gekennzeichnet ist, dass** sie
- Betätigungsmittel (31, 33) für das Verriegelungsorgan (18), die mit dem Einsteckteil (11) verbunden und dazu eingerichtet sind, mit dem Verriegelungsorgan (18) derart zusammenzuwirken, dass das Einfügen des Einsteckteils (11) in das Aufnahmeteil (12) das Positionieren des Einsteckteils (11) zwischen den Armen (20a, 20b) des Verriegelungsorgans (18) bewirkt, und
- elastische Rückzugsmittel (23a, 23b; 25a, 25b) aufweist, die mit dem Verriegelungsorgan (18) verbunden sind, um mit dem Aufnahmeteil (12) derart zusammenzuwirken, dass das Verriegelungsorgan (18) nach dem Einfügen des Einsteckteils (18) automatisch die Positionierung des Einsteckteils (11) in dem Aufnahmeteil (12) blockiert.

2. Verbindungsvorrichtung nach Anspruch 1, **dadurch gekennzeichnet, dass** die Betätigungsmittel einen Betätigungskegel (31) aufweisen, der einstückig mit dem Einsteckteils (11) ausgebildet und dazu eingerichtet ist, mit einer Unterkante (33) des Kopfes (19) des Verriegelungsorgans (18) in Eingriff zu kommen, um das Anheben des Verriegelungsorgans (18) während des Einfügens des Einsteckteils (11) zu bewirken.

3. Verbindungsvorrichtung nach Anspruch 2, **dadurch gekennzeichnet, dass** die Unterkante (33) des Kopfes (19) des Verriegelungsorgans (18) abgerundet ist.

4. Verbindungsvorrichtung nach einem der Ansprüche 2 oder 3, **dadurch gekennzeichnet, dass** das Aufnahmeteil (12) Aufnahmenuten (21 a, 21 b) aufweist, die dazu eingerichtet sind, die Arme (20a, 20b) des Verriegelungsorgans (18) aufzunehmen, wobei die Nuten (21 a, 21 b) während der Betätigung des Verriegelungsorgans (18) als Führungsschienen dienen.

5. Verbindungsvorrichtung nach einem der Ansprüche 1 bis 4, **dadurch gekennzeichnet, dass** die elastischen Rückzugsmittel wenigstens eine verformbare Zunge (23a, 23b) aufweisen, die einstückig mit einem zugehörigen Arm (20a, 20b) des Verriegelungsorgans (18) ausgebildet und dazu eingerichtet ist, sich während des Einfügens des Einsteckteils (11) entlang einer zugehörigen Gleitfläche (25a, 25b) in das Aufnahmeteil (12) zu verschieben.

6. Verbindungsvorrichtung nach Anspruch 5, **dadurch gekennzeichnet, dass** jede verformbare Zunge (23a, 23b) ein fixiertes Ende, das einstückig mit dem zugehörigen Arm (20a, 20b) des Verriegelungsorgans (18) ausgebildet ist, und ein gewölbtes freies Ende (24a, 24b) aufweist, das auf der zugehörigen Gleitfläche (25a, 25b) verschiebbar ist.

7. Verbindungsvorrichtung nach einem der Ansprüche 5 oder 6, **dadurch gekennzeichnet, dass** jede Gleitfläche (25a, 25b) einstückig mit dem Aufnahmeteil (12) ausgebildet ist und in der Stellung nach dem Einfügen des Einsteckteils (11) eine vorbestimmte Neigung aufweist, um einen elastischen Rückzug der zugehörigen verformbaren Zunge (23a, 23b) sicherzustellen.

8. Verbindungsvorrichtung nach einem der Ansprüche 5 bis 7, **dadurch gekennzeichnet, dass** das Aufnahmeteil (12) wenigstens eine Blockierstufe (26a, 26b) aufweist, die mit jeder Gleitfläche (25a, 25b) verbunden und dazu eingerichtet ist, die zugehörige verformbare Zunge (23a, 23b) des Verriegelungsorgans (18) in einer Freigabestellung (C) zu halten, die das Entfernen des Einsteckteils (11) aus dem Aufnahmeteil (12) gestattet.

9. Verbindungsvorrichtung nach einem der Ansprüche 1 bis 8, **dadurch gekennzeichnet, dass** das Einsteckteil (11) wenigstens eine Rückhaltenut (32) aufweist, in die sich der Kopf (19) des Verriegelungsorgans (18) am Ende des Einfügewegs des Einsteckteils (11) automatisch einordnet.

10. Verbindungsvorrichtung nach einem der Ansprüche 1 bis 9, **dadurch gekennzeichnet, dass** der Kopf (19) des Verriegelungsorgans (18) eine Oberkante (34) aufweist, die wenigstens eine gekrümmte Lamelle (37) aufweist, die dazu eingerichtet ist, mit einer Halteschulter (35) zusammenzuwirken, die von dem Aufnahmeteil (12) vorsteht.

11. Verbindungsvorrichtung nach einem der Ansprüche 1 bis 10, **dadurch gekennzeichnet, dass** das Aufnahmeteil (12) seitliche Anschläge (28a, 28b) aufweist, die mit Blockiernasen (27a, 27b) zusammenwirken, die einstückig mit den freien Enden der Seitenarme (20a, 20b) des Verriegelungsorgans (18) ausgebildet sind.

12. Verbindungsvorrichtung nach einem der Ansprüche 1 bis 11, **dadurch gekennzeichnet, dass** das Verriegelungsorgan (18) durch Abtrennen und Biegen eines Blechs oder eines Metallbands von vorbestimmter Dicke hergestellt ist.
